Europäisches Patentamt

European Patent Office

Office européen des brevets

(19)

(11) Publication number: **0 076 081**

**A2**

(12)

# EUROPEAN PATENT APPLICATION

(21) Application number: **82304958.0**

(22) Date of filing: **21.09.82**

(51) Int. Cl.³: **F 28 D 15/00**
**F 24 J 3/02, F 25 B 1/06**
**F 25 B 19/00, A 41 D 13/00**

(30) Priority: **25.09.81 GB 8129028**

(43) Date of publication of application:
**06.04.83 Bulletin 83/14**

(84) Designated Contracting States:
**DE FR SE**

(71) Applicant: **The Secretary of State for Defence in Her Britannic Majesty's Government of The United Kingdom of Great Britain and Northern Ireland Whitehall London SW1A 2HB(GB)**

(72) Inventor: **Graveney, Michael James 195 Frimley Green Road Frimley Green Surrey(GB)**

(74) Representative: **Miller, Ronald Anthony et al, Procurement Executive, Ministry of Defence Patents 1A4, Room 2014 Empress State Building Lillie Road London SW6 1TR(GB)**

(54) **Improvements in or relating to heat pipes.**

(57) A heat pipe assembly including a vacuum pump for maintaining a low pressure regime within the assembly. The vacuum pump is preferably a jet pump. Typically the assembly includes a heat pipe in sheet form, and may be rigid as in a solar heat collector panel, or conformable as in a conditioning garment.

Fig.1.

EP 0 076 081 A2

Croydon Printing Company Ltd.

1

JX/6119

IMPROVEMENTS IN HEAT PIPES

The present invention relates to heat pipes. It is particularly concerned with heat pipes, especially conformable heat pipes in sheet form, used for cooling when heat source and sink are remote or otherwise unfavourably separated, or disconnectable or mobile one with respect to another.

According to the present invention a heat pipe assembly has evacuator pump means for evacuating, outgassing and maintaining evacuated and outgassed, the interior of the assembly.

The evacuator pump means may be arranged for intermittent or continuous operation, and the assembly may have a deliberate leak thereinto. The assembly may therefore comprise a heat receiver in heat pipe form, a heat sink, a pump for pumping liquid from the sink to the receiver, and the evacuator pump in the vapour line between the receiver and the sink, preferably as close to the sink as possible. If the heat sink is to operate at a temperature not much lower than that at which the receiver is to operate it may be in heat pump form, and comprise a compressor, as described in the co-pending UK patent application 8129023, when the evacuator may be arranged to operate intermittently between the compressor and the heat sink.

It has been additionally discovered by the present inventor that a jet pump makes a particularly effective evacuator pump, a jet pump being a device having a chamber with a driving fluid inlet and outlet nozzle facing one another and an entrainment inlet thereto. It is capable of sucking down to the saturated vapour pressure of the driving fluid when this fluid is liquid. The driving fluid of the jet pipe need not be the same as the working fluid of the heat pipe assembly, but where it is means are preferably included whereby non-condensable gases can leave the heat pipe.

In one embodiment of the invention the heat receiver is a conditioning garment as described in UK patent application 8106782 or in copending UK patent application 8129024.

In another important embodiment of the invention the heat pipe assembly comprises a panel for employing solar heat to heat water.

A suitable working fluid is water, though other liquids, for example methanol or one of the freon refrigerants, may be employed dependent on the temperature to which it is required to cool.

Two embodiments of the present invention will now be described by way of example with reference to the accompanying drawings of which:

Figure 1 is a schematic diagram of a "solar panel" embodiment of the invention, and

Figure 2 is a schematic diagram of a conditioning garment embodiment of the invention.

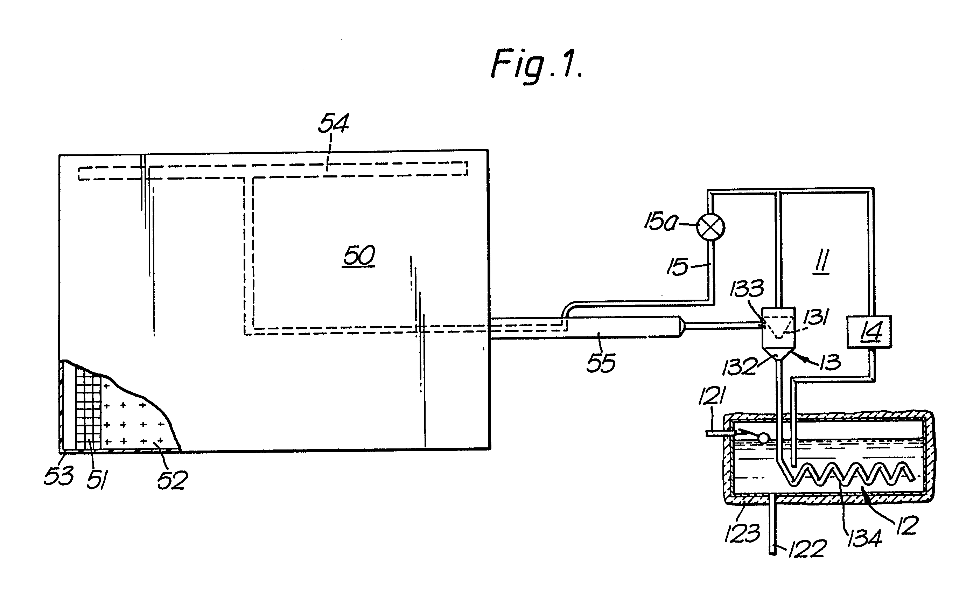

Figure 1 shows a heat pipe assembly comprising a colar panel 50 of rigid heat pipe construction associated via pump apparatus 11 with a domestic water reservoir 12.

The panel 50 comprises a reticulated structure 51 in sheet form supporting on an outer wall thereof a perforated wick sheet 52 and envloped in a rigid metallised plastics sheet 53. It has a liquid distributor 54 which, together with a vapour outlet duct, communicates with the pump apparatus 11 via an umbilical 55.

The pump apparatus 11 comprises a jet pump 13, and a pump 14.

The jet-pump 13 comprises a chamber having a liquid inlet nozzle 131 and an outlet nozzle 132 and a vapour inlet controlled by a non-return valve 133. The vapour inlet leads from the vapour duct in the umbilical 55, while the outlet nozzle 132 leads to the reservoir 132 via a heat exchanger coil 134.

The reservoir 12 has an inlet 121 and an outlet 122 and is surrounded by insulant 123, arranged to take liquid from the liquid from the reservoir 12 and pass it to the inlet nozzle 131 of the jet pump 12, and via a tube 15 and a control cock 15 to the liquid distributor 54.

A description of the operation cycle of the assembly illustrated in figure 1 now follows. With the cock 15a closed the pump 14 is operated to pump liquid from the reservoir 12 through the jet pump 13. This entrains, via the non-return valve 123, fluids (including gases) within the panel 50 and evaluates it. Then the cock 15 is opened to allow liquid to feed the wick 52 in the panel 50, via the distributor 54, and the panel is then ready to operate as a solar heat transducer in the manner of a heat pipe. Vapour given off by the wick 52 passes through the reticulated structure 51, the umbilical 55 and the jet pump 13 to be condensed in the reservoir 12.

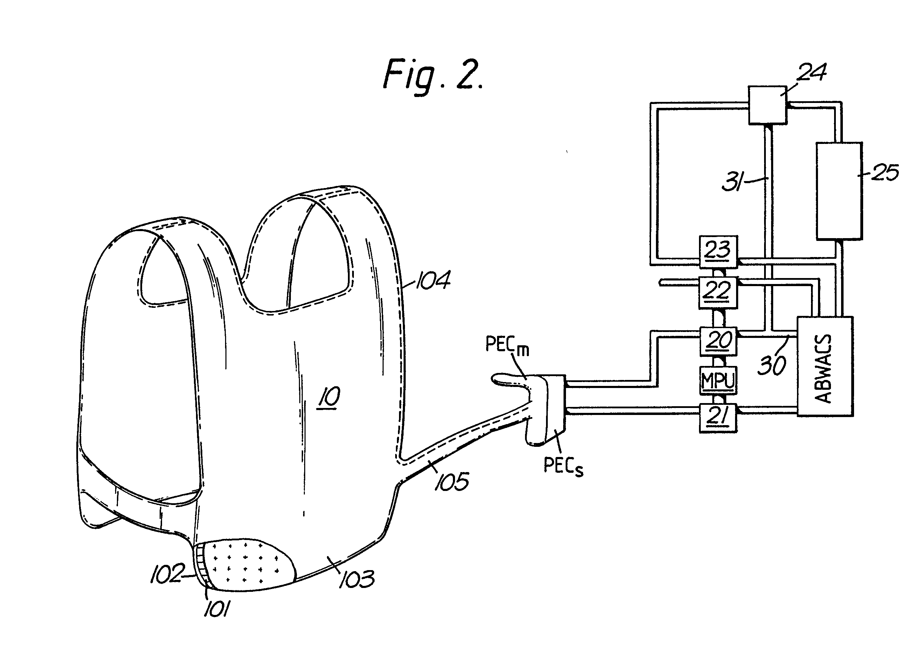

The assembly illustrated in figure 2 includes a garment 10 in conformable sheet heat pipe form, comprising a reticulated structure 101 supporting an outer wall thereof a perforated wick sheet 102 and enveloped in a metallised plastics film 103. It has a liquid distributor 104, which, together with a vapour outlet duct, communicates with a connector portion PGC via an umbilical 105. The assembly has a heat sink comprising a compressor 20, a condenser ABWACS, a liquid pump 21, a power unit MPU, a blower 22, an evacuator pump 23, a jet pump 24 and a liquid reservoir 25. The compressor 20, the pumps 21 and 23 and the blower 22 are arranged to be driven by the unit MPU. The compressor is arranged to receive vapour from the connector PEC and pass it via a tube 30 to the condenser ABWACS, and the pump 21 to receive condensate from the condenser and pass it to the garment 10. The condenser ABWACS is substantially as described in copending UK patent application 8129027 and comprises a closed chamber having a furrowed floor and ceiling and a collecting trough, there being contiguous with the

4

ceiling outside the chamber a wick in a duct. The closed chamber is arranged to receive vapour from the tube 30 while the trough is connected to the pump 21. The wick is arranged to be supplied with a trickle of liquid from the reservoir 25 and to have air passed over it from the blower 22. The jet pump 24 is similar to that described with reference to figure 1. Its chamber liquid inlet is connected to the pump 23, and the outlet to the reservoir 25. The non-return valve controlled chamber inlet is connected via a tube 31 to the tube 30.

The garment 10 is preferably connected to the heat sink apparatus already evacuated, outgassed and back-filled with an appropriate quantity of liquid. Alternatively evacuation and outgassing may be effected after connection by operation of the pump 23 in consort with the compressor 20 but with the pump 21 off, the reservoir 25 at the condenser ABWACS having been charged with liquid, when the jet pump 24 will suck gases and vapours from the garment 10 and the chamber of the condenser ABWACS. Thereafter the normal operating cycle of the assembly includes pumping of liquid by the pump 21 from the condenser to the garment 10, trickling of liquid from the reservoir 25 onto the wick·in the condenser and evaporating it with air from the blower 22, whereby vapour received in the condenser from the garment 10 via the compressor 20 is condensed. The pump 23 is then operated intermittently to outgas the assembly and maintain the low pressure regime therein.

## CLAIMS

1. A heat pipe assembly having evacuator pump means for evacuating, outgassing and maintaining evacuated and outgassed, the interior of the assembly.

2. A heat pipe assembly as claimed in claim 1 and comprising a heat receiver in heat pipe form, a heat sink, a pump for pumping liquid from the sink to the receiver, and the evacuator pump in a vapour line between the receiver and the sink.

3. A heat pipe assembly as claimed in claim 2 and wherein the heat sink is a heat pump.

4. A heat pipe assembly as claimed in claim 1 and wherein the evacuator pump means comprises a jet pump.

5. A heat pipe assembly as claimed in claim 1 and wherein the heat pipe is in sheet form.

6. A heat pipe assembly as claimed in claim 5 and wherein the heat pipe is conformable.

7. A heat pipe assembly as claimed in claim 6 and wherein the heat pipe is a garment.

8. A heat pipe assembly as claimed in claim 2 and wherein the heat receiver is in panel form.

9. A heat pipe assembly as claimed in claim 8 and wherein the heat receiver is a solar heat collector panel.

# Fig.1.

Fig. 2.